Europäisches Patentamt

(19) European Patent Office

Office européen des brevets

(11) Veröffentlichungsnummer: **0 123 012
B1**

(12) **EUROPÄISCHE PATENTSCHRIFT**

(45) Veröffentlichungstag der Patentschrift:
**27.08.86**

(51) Int. Cl.⁴: **F 41 H 7/12** // F41F23/00, F41G5/14

(21) Anmeldenummer: **84100126.6**

(22) Anmeldetag: **09.01.84**

(54) **Einrichtung zum Horizontieren einer drehbaren Waffenplattform.**

(30) Priorität: **01.03.83 DE 3307069**

(43) Veröffentlichungstag der Anmeldung:
**31.10.84 Patentblatt 84/44**

(45) Bekanntmachung des Hinweises auf die Patenterteilung:
**27.08.86 Patentblatt 86/35**

(84) Benannte Vertragsstaaten:
**DE FR GB IT NL**

(56) Entgegenhaltungen:
**DE - C - 977 592**

(73) Patentinhaber: **Rheinmetall GmbH,
Ulmenstrasse 125 Postfach 6609, D-4000 Düsseldorf
(DE)**

(72) Erfinder: **Becker, Wilfried, Dipl.-Ing., Lewitstrasse 43,
D-4000 Düsseldorf (DE)**
Erfinder: **Pahnke, Klaus-Dieter, Dipl.-Ing.,
Frans-Hals-Weg 13, D-4010 Hilden (DE)**

(74) Vertreter: **Behrens, Ralf Holger, Dipl.-Phys., in Firma
Rheinmetall GmbH Ulmenstrasse 125 Postfach 6609,
D-4000 Düsseldorf 1 (DE)**

**Beschreibung**

Die Erfindung betrifft eine Einrichtung zum Horizontieren einer drehbaren Waffenplattform nach dem Oberbegriff des Patentanspruchs 1, wie sie beispielsweise in der DE-C-977 592 beschrieben ist.

Bei stark erhöhbaren, steil schiessenden Waffensystemen, wie Haubitzen, Fla-Kanonen, Mörsern etc. wirken sich bei Selbstfahrlafetten Schiefstellungen und Verankerungen fehlerhaft auf Ziel- und Richteinrichtungen aus. Bekannte Waffensysteme, deren Waffenanlagen in zwei Richtachsen horizontiert werden, eignen sich beispielsweise bei einer kardanischen Horizontierung nicht für die Übertragung hoher Kräfte oder bei einer Kugellagerung würde sich die Waffenanlage neben einem grossen erforderlichen Bauvolumen nur schwer und aufwendig stabilisieren und horizontieren lassen.

Aus der DE-C-977 592 ist eine Einrichtung zum mehrachsigen Stabilisieren einer auf einer beweglichen Basis befindlichen Plattform bekannt, bei der jedoch bei jeder Änderung der Waffenanlage in Seitenrichtung die Plattform neu horizontiert werden muss. Zur Realisierung einer stetigen horizontalen Lage der Plattform ist ein hoher regelungstechnischer Aufwand erforderlich.

Aufgabe der Erfindung ist es, eine einfache, stabile und raumsparende Einrichtung zum Horizontieren einer drehbaren Waffenplattform zu schaffen, durch die in einer ruhenden Stellung eines vorzugsweise als Basis dienenden Fahrzeuges dessen Hanglage und Verkantung nur einmal automatisch oder manuell gegenüber der horizontalen Ebene ohne aufwendige Regel- und Steuerorgane ausgleichbar sein soll, damit die Waffenanlage ohne Verkantungsausgleich beliebig um die Seitenrichtachse richtbar ist.

Gelöst wird diese Aufgabe durch die im kennzeichnenden Teil des Patentanspruches 1 angegebenen Merkmale. Vorteilhafte Ausgestaltungen und Weiterbildungen gehen aus den Unteransprüchen hervor.

Die Erfindung wird anhand der in den Zeichnungen dargestellten bevorzugten Ausführungsbeispiele des näheren erläutert.

Es zeigen:

Fig. 1: in einer teilweise geschnittenen Seitenansicht eine in einem Fahrzeugdach gelagerte Einrichtung zum Horizontieren einer auf der Einrichtung befindlichen Waffenplattform;

Fig. 2: in einer vereinfachten räumlichen Darstellung die Einrichtung zum Horizontieren ohne Darstellung der Waffenplattform, bestehend aus zwei massiven abgeschrägten Zylinderscheiben, die auf einem schematisch dargestellten Fahrzeugdach angeordnet sind;

Fig. 3: in einer Draufsicht von Fig. 2 die Einrichtung in Zurrstellung, wobei in der Waffenplattform ein Lagegeber angeordnet ist;

Fig. 4: die Einrichtung entsprechend Fig. 3 in einer Stellung, in der der Lagegeber die horizontale Lage einer Achse der Einrichtung anzeigt;

Fig. 5: die Einrichtung entsprechend Fig. 3, in der der Lagegeber die horizontale Lage der Oberseite der Einrichtung anzeigt;

Fig. 6: eine schematische Darstellung der Oberseite der Einrichtung zum Horizontieren und die Aufnahmefläche einer räumlich schräg geneigten Basis, auf der die Oberseite der Einrichtung die Zurrstellung einnimmt;

Fig. 7: eine Stellung, in der die Oberseite der Einrichtung gegenüber Fig. 6 in einer Achse horizontiert ist;

Fig. 8: die Oberseite der Einrichtung in einer gegenüber Fig. 7 um die horizontierte Achse geschwenkten horizontalen Lage;

Fig. 9: in einer schematischen Darstellung der Ansicht 9 von Fig. 6 die Einrichtung zum Horizontieren und die Waffenplattform in Zurrstellung auf einer verkanteten und in Hanglage stehenden Basis;

Fig. 10: in einer vereinfachten Schnittdarstellung entlang der in Fig. 4 gekennzeichneten Fläche 10-10 die Waffenplattform und die Einrichtung zum Horizontieren in einer Achse horizontiert;

Fig. 11: in einer schematischen Darstellung der Ansicht 11 von Fig. 8 die Waffenplattform in horizontierter Stellung auf einer verkanteten und in Hanglage stehenden Basis.

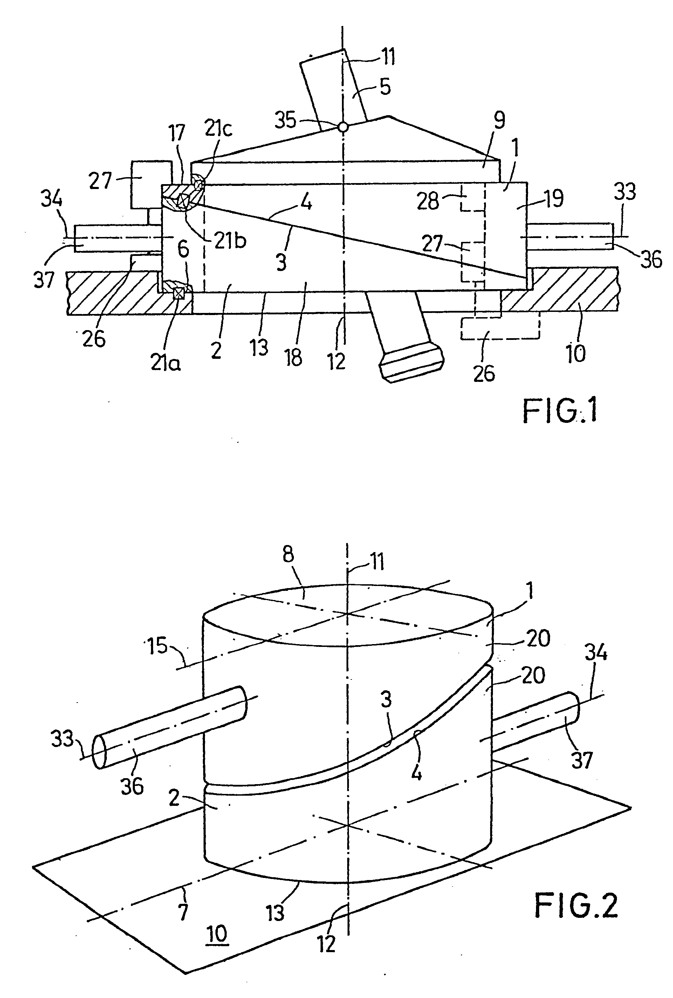

Gem. Fig. 1 ist in einer als ruhende Basis dienenden Fahrzeugwanne bzw. einem Fahrzeugdach 10 eine aus den Körpern 1, 2 bestehende Einrichtung zum Horizontieren einer drehbaren Plattform 9 gelagert. Die Körper 1, 2 der Einrichtung sind ringförmig als einseitig abgeschrägte hohle Zylinderscheiben 19 ausgebildet, deren zugekehrte Seitenflächen 3, 4 parallel verlaufen und gegenüber einem in der Fahrzeugwanne bzw. Fahrzeugdach 10 gelagerten Boden 13 des Körpers 2 schiefe Ebenen bilden.

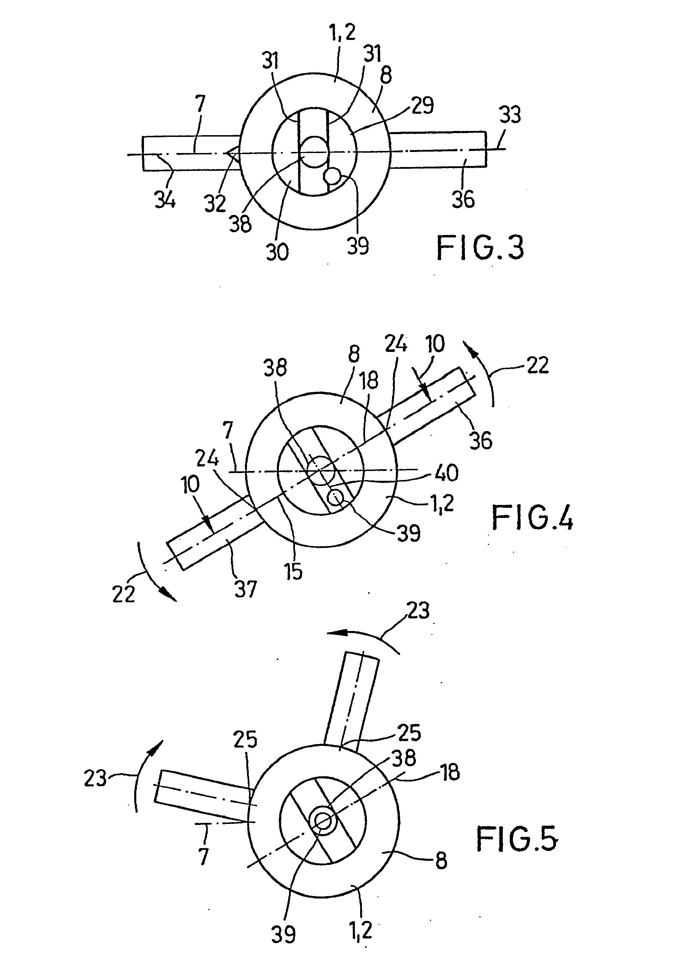

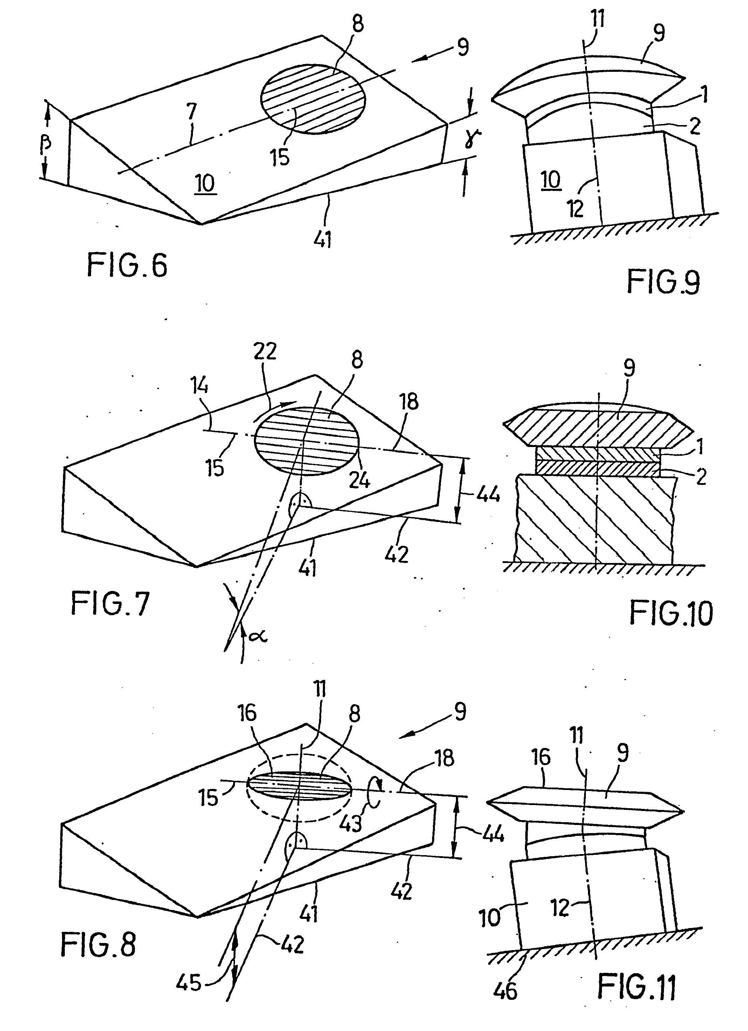

Die als Aufnahmefläche 17 für die Aufnahme der Waffenplattform 9 dienende Oberseite 8 des Körpers 1 bildet in der im Beschreibungstext der Fig. 2 und 3 näher erläuterten Zurrstellung eine zum Boden 13 des Körpers 2 parallele Fläche. Zwischen dem Boden 13 des Körpers 2 und einer Lagerfläche 6 der Fahrzeugwanne bzw. Fahrzeugdach 10, zwischen den Seitenflächen 3 und 4 der Körper 1 und 2 und zwischen der Aufnahmefläche 17 des Körpers 1 und der Waffenplattform 9 sind Lager 21 zu dem Zweck vorgesehen, die Körper 1, 2 während des Horizontiervorganges durch das Lager 21a gemeinsam um die Fahrzeughöhenachse 12 verdrehen zu können, damit anschliessend durch eine über die Lager 21a und 21b in entgegengesetzte Richtung 23 (Fig. 5) erfolgte Drehbewegung beider Körper 1, 2 die Waffenplattform 9 horizontiert werden kann. Damit eine auf der Waffenplattform 9 in einer Schildzapfenlagerung 35 schwenkbar angeordnete Waffe 5 während dieses Richtvorganges entweder in ihrer Zurrstellung verharren oder bei horizontierter Waffenplattform 9 in jede beliebige Stellung um die Seitenrichtachse 11 richtbar ist, befindet sich ein weiteres Lager 21c zwischen der Aufnahmefläche 17 des Körpers 1 und der Waffenplattform 9. Ein vorzugsweise an der Waffenplattform 9 angeordneter Seitenrichtantrieb 28, der mit dem Körper 1 in Eingriff steht, jedoch während der Drehbewegungen des Körpers 1 entkoppelt ist, richtet die Waffenplattform 9 dabei in die für die Waffe 5 vorgesehene Seitenrichtung aus. Die zum Horizontieren der Waffenplattform 9 notwendigen Drehbewegungen des Körpers 1, 2 lassen sich einfach entweder manuell durch Drehen der um die Körperachsen 33, 34 an den Körpern 1, 2 angeordneten Hebel 36, 37 oder manuell bzw. motorisch durch einen an der Fahrzeugwanne bzw Fahrzeugdach 10 befestigten Antrieb 26, der innenseitig oder aussenseitig den Körper 2 antreibend mit einem mit dem Körper 1 in Eingriff stehenden Getriebe 27 verbunden ist, durchführen. Die Ausführung des Antriebes 26 kann verschiedenartig sein, beispielsweise kann er durch einen zeichnerisch nicht dargestellten Schneckenantrieb, der mit einem am Körper 2 angeordneten, ebenfalls nicht dargestellten Zahnkranz in Eingriff steht, erfolgen. Ebenso kann der Antrieb des Körpers 1 über verschiedenartige Ausführungen des Getriebes 27, beispielsweise über ein nicht näher dargestelltes, in parallel zur Fahrzeughöhenrichtachse 12 verlaufender Richtung verschieblich mit dem Antrieb 26 verbundenes Wechsel- oder Schaltgetriebe erfolgen, das bei gemeinsamer Drehbewegung der Körper 1, 2 in die Richtung 22 (Fig. 4) gesperrt oder gleichläufig ist oder bei entgegengesetzter Drehbewegung derartig zwischen den Körpern 1, 2 in Eingriff ist, dass die Körper 1, 2 jeweils gleichzeitig und gleichförmig in die entgegengesetzten Richtungen 23 (Fig. 5) gedreht werden können.

In Fig. 2 sind die Körper 1, 2 der Einrichtung zum Horizontieren als einfache, massive und einseitig abgeschrägte Zylinderscheiben 20 ausgebildet, wobei die Oberfläche 8 der oberen Zylinderscheibe 20 beispielsweise durch kurzzeitige manuelle Drehung der Hebel 36, 37 in zunächst gleichgerichteter (Fig. 4) und anschliessend in entgegengesetzter Richtung (Fig. 5) gegenüber einer in Fig. 6 dargestellten Hanglage und Verkantung eines Fahrzeuges mit der Fahrzeugwanne bzw. dem Fahrzeugdach 10 horizontierbar ist. Die Körper 1, 2 befinden sich in der Stellung, in der die Waffe 5 (Fig. 1) gezurrt ist, d.h., die Längsachse 15 und die Körperachsen 33, 34 verlaufen in gleichparallele Richtung wie die Fahrzeuglängsachse 7, wobei die Oberseite 8 des Körpers 1 und die Fläche des Bodens 13 des Körpers 2 parallele Flächen bilden.

In dieser Zurrstellung bilden die rechtwinklig auf der Oberseite 8 stehende Achse des Körpers 1 und die Seitenrichtachse 11 der in Fig. 1 dargestellten Waffenplattform 9 mit der rechtwinklig auf der Lagerfläche 6 (Fig. 1) der Fahrzeugwanne bzw. dem Fahzeugdach 10 stehenden Fahrzeughöhenachse 12 eine Gerade. Die schiefen Seitenflächen 3, 4 sind in Richtung der Fahrzeuglängsachse 7 von vorne nach hinten steigend angeordnet, wobei eine fallende Anordnung von vorne nach hinten ebenso sinnvoll möglich wäre. Die Oberseite 8 des Körpers 1 ist nicht nur Aufnahmefläche 17 (Fig. 1) für eine Waffenplattform 9, sondern gleichzeitig auch eine Bezugsfläche für einen in Fig. 3 dargestellten Lagegeber 29.

Die Ausführung eines Lagegebers 29, beispielsweise als Dosenlibelle 30 und Anordnung auf der Oberseite 8 des Körpers 1, ist in Fig. 3 dargestellt. Die Dosenlibelle 30 ist mit zwei parallel verlaufenden Markierungen 31 versehen, die in Zurrstellung der Waffe 5 (Fig. 1) quer zur Fahrzeuglängsachse 7 angeordnet sind. Die Libelle 30 weist in ihrem Zentrum eine kreisförmige Markierung 38 auf, die im Falle einer horizontierten Lage der Libelle 30 und somit auch der Waffenplattform 9 (Fig. 1) die Gasblase 39 konzentrisch umschliesst. Die Körper 1, 2 sind in Zurrstellung der Waffe 5 (Fig. 1) ausgerichtet, wobei die Körperachsen 33, 34 mit der Fahrzeuglängsachse 7 parallel in gleicher Richtung verlaufen. Zur besseren Einnahme und Kontrolle der Zurrstellung sind die Körper 1, 2 gegenüber der Waffenplattform 9 (Fig. 1) und der Fahrzeugwanne bzw. dem Fahrzeugdach 10 (Fig. 1) mit Markierungen 32 versehen. Die Gasblase 39 befindet sich ausserhalb der Markierungen 31, 38, wodurch eine Verkantung in Hanglage gem. Fig. 6 der Oberseite 8 angezeigt wird.

Wie die Oberseite 8 und somit auch die Waffenplattform 9 (Fig. 1) beispielsweise auf einfache Weise motorisch oder manuell mittels einer Libelle 30 horizontiert werden kann, soll anhand der Fig. 4 und 5 erläutert werden. Beide Körper 1, 2 werden durch den Antrieb 26 (Fig. 1) oder durch die Hebel 36, 37 solange mit gleicher Winkelgeschwindigkeit in Richtung 22 um die Fahrzeughöhenachse 12 gedreht, bis die Verbindungslinie 40 der Mittelpunkte der Gasblase und der Markierung 38 eine parallele Lage zur Markierung 31 einnimmt. In dieser Stellung 24, nimmt die Längsachse 15 der Oberseite 8 gemeinsam mit einer Schwenkachse 18 eine horizontale Lage 14 (Fig. 7) ein. Die Waffe 5 (Fig. 1) befindet sich, während die Körper 1, 2 die Stellung 24 einnehmen, weiterhin in Zurrstellung. Beide Körper 1, 2 werden nunmehr aus der Stellung 24 gleichzeitig und gleichförmig solange gegeneinander in Richtung 23 gedreht, bis die Gasblase 39 konzentrisch von der Markierung 38 umschlossen wird, wobei die Körper 1, 2 unter Einnahme der Stellung 25 die Waffenplattform 9 (Fig. 1) um die Schwenkachse 18 in eine horizontale Lage 16 (Fig. 8) geschwenkt haben. Zur Erzeugung einer motorisch angetriebenen gegenläufigen Drehbewegung in Richtung 23 ist es notwendig, den Gleichlauf des Körpers 1 gegenüber dem Körper 2 durch das Getriebe 27 (Fig. 1) aufzuheben. In der horizontierten Lage 16 (Fig. 8) der Oberseite 8, kann die auf der Waffenplattform 9 (Fig. 1) angeordnete Waffe 5 (Fig. 1) entzurrt und gerichtet werden.

Die Fig. 6, 7 und 8 verdeutlichen schematisch den Horizontiervorgang der Oberseite 8 des Körpers 1 (Fig. 3), die in Zurrstellung (Fig. 6) mit ihrer Längsachse 15 in Richtung der Fahrzeuglängsachse 7 eine parallele Lage zu einer unter dem Winkel β verkanteten und unter dem Winkel γ in Hanglage gegenüber einer horizontalen Ebene 41 geneigten Fahrzeugwanne bzw. Fahrzeugdach 10 einnimmt.

In Fig. 7 befindet sich die Oberfläche 8 in der Stellung 24, in der sie durch gemeinsames Drehen der Körper 1, 2 (Fig. 4) in Richtung 22 unter einem Neigungswinkel α geneigt ist und ihre Längsachse 15 und die Schwenkachse 18 eine horizontale Lage 14 einnehmen. Während in Fig. 7 nur die Schwenkachse 18 gegenüber einer Koordinate 42 der horizontalen Ebene 41 einen parallelen Abstand 44 einnimmt, verdeutlicht Fig. 8 die bereits horizontierte Lage 16 der Oberfläche 8, wobei durch die gegenläufige gleichzeitige und gleichförmige Drehbewegung 23 (Fig. 5) der Körper 1, 2 (Fig. 5) die Oberfläche 8 in Richtung 43 um die Schwenkachse 18 geschwenkt wurde und dadurch auch die Querachse der Längsachse 15 gegenüber einer weiteren Koordinate 42 der horizontalen Ebene einen parallelen Abstand 45 eingenommen hat, so dass die Seitenrichtachse 11 ihre für den Richtvorgang notwendige senkrechte Lage erreicht hat.

Die Fig. 9, 10 und 11 verdeutlichen die einzelnen Stellungen einer verkantet in Hanglage stehenden schematisch dargestellten Basis 10, auf der durch die aus den Körpern 1, 2 gebildete Einrichtung die Waffenplattform 9 horizontiert werden soll. In Fig. 9 nimmt die Waffenplattform 9 bei in der Richtung übereinstimmender Fahrzeughöhenachse 12 und Seitenrichtachse 11 die Zurrstellung ein, während in Fig. 10 die Waffenplattform 9 nur in der Schwenkachse 18 (Fig. 7) horizontiert ist und in Fig. 11 die horizontale Lage 16 der Waffenplattform 9 erreicht ist. Deutlich ist in Fig. 11 erkennbar, dass die Fahrzeughöhenachse 12 unverändert ihre rechtwinklige Lage gegenüber dem geneigten Hang 46 beibehält, während die Seitenrichtachse 11 durch die Einrichtung zum Horizontieren der Waffenplattform 9 die senkrechte Lage eingenommen hat.

Die Einrichtung der Erfindung zeichnet sich vorteilhaft dadurch aus, dass der Horizontierungsvorgang der Waffenplattform einfach und schnell mit geringem mechanischen Bauaufwand und einer geringen Anzahl von Bauelementen, insbesondere beweglicher Teile, durchgeführt werden kann. Durch stabile und robuste Bauformen eignet sich die Einrichtung besonders zur Übertragung von hohen Kräften. In vorteilhafter Weise kann durch die Einrichtung die Waffenplattform manuell oder motorisch in Schussrichtung geschwenkt werden, wobei der Verkantungsausgleich nur einmal je Feuerstellung notwendig ist und dabei die Waffe beliebig gerichtet werden kann. Ein weiterer wesentlicher Vorteil der Erfindung ist es, dass die Einrichtung zum Horizontieren ohne Elektronik oder regelungstechnischen Aufwand und aufwendige Steuerelemente auskommt. Die Einrichtung kann in bevorzugter Weise in Ringform auf einem Fahrzeugdach angeordnet sein, wodurch raumsparend ein Durchgang für einen Turmkorb, für die Waffe und für die Mannschaft geschaffen wird und auf einfache Art und Weise ein ABC-Schutz möglich ist.

*Bezugszeichenliste*
1 Körper
2 Körper
3 Seitenfläche
4 Seitenfläche
5 Waffe
6 Lagerfläche
7 Fahrzeuglängsachse
8 Oberseite
9 Waffenplattform
10 Fahrzeugwand bzw. Fahrzeugdach
11 Seitenrichtachse
12 Fahrzeughöhenachse
13 Boden
14 Lage
15 Längsachse
16 Lage
17 Aufnahmefläche
18 Schwenkachse
19 Zylinderscheibe (hohl)
20 Zylinderscheibe (massiv)

21 Lager
22 Richtung
23 Richtung
24 Stellung
25 Stellung
26 Antrieb
27 Getriebe
28 Seitenrichtantrieb
29 Lagegeber
30 Dosenlibelle
31 Markierung
32 Markierung
33 Körperachse
34 Körperachse
35 Schildzapfenlagerung
36 Hebel
37 Hebel
38 Markierung
39 Gasblase
40 Verbindungslinie
41 Ebene
42 Koordinate
43 Richtung
44 Abstand
45 Abstand
46 Hang
$\alpha$, $\beta$, $\gamma$, Winkel

## Patentansprüche

1. Einrichtung zum Horizontieren einer drehbaren Waffenplattform (9), die mit verstellbaren Mitteln und Lagegebern (29) zum Ausgleich der Verkantung und Hanglage gegenüber einer ruhenden Basis (10) als Zwischenträger für einen Waffenturm, vorzugsweise in oder auf einem Fahrzeug, lafettiert ist, dadurch gekennzeichnet, dass die Einrichtung aus zwei gemeinsam und gegeneinander drehbeweglich verbundenen Körpern (1, 2) besteht, deren einander zugekehrte Seitenflächen (3, 4) parallel verlaufen und gegenüber einem vorzugsweise in der Fahrzeugwanne bzw. Fahrzeugdach (10) gelagerten Boden (13) des Körpers (2) schiefe Ebenen bilden, und dass die Oberseite (8) des Körpers (1) eine horizontierbare Aufnahmefläche (17) für die Waffenplattform (9) darstellt, wobei eine Schwenkachse (18) der Waffenplattform (9) und die Längsachse (15) der Oberseite (8) in einer gemeinsamen in Richtung (22) gedrehten Stellung (24) der Körper (1, 2) eine horizontale Lage (14) einnehmen und in einer gleichzeitig, gleichförmig, jedoch entgegengesetzt in die Richtungen (23) gedrehten Stellung (25) der Körper (1, 2), die Waffenplattform (9) eine um die Schwenkachse (18) geschwenkte horizontale Lage (16) einnimmt.

2. Einrichtung nach Anspruch 1, dadurch gekennzeichnet, dass die Körper (1, 2) als hohle (19) oder massive (20) einseitig abgeschrägte Zylinderscheiben (19, 20) ausgebildet sind.

3. Einrichtung nach den Ansprüchen 1 und 2, dadurch gekennzeichnet, dass in Zurrstellung der Waffe (5) die Längsachse (15) und die Körperachsen (33, 34) parallel zur Fahrzeuglängsachse (7) verlaufen, die Seitenrichtachse (11) der Waffenplattform (9) mit der rechtwinkelig auf der Lagerfläche (6) der Fahrzeugwanne bzw. dem Fahrzeugdach (10) stehenden Fahrzeughöhenachse (12) eine Gerade bildet und die Oberseite (8) zum Boden (13) parallel verläuft, wobei die schiefen Seitenflächen (3, 4) vorzugsweise in Richtung Fahrzeuglängsachse (7) steigend oder fallend angeordnet sind.

4. Einrichtung nach einem der Ansprüche 1 bis 3, dadurch gekennzeichnet, dass zwischen der Fahrzeugwanne bzw. dem Fahrzeugdach (10) un dem Boden (13) des Körpers (2), zwischen der Aufnahmefläche (17) des Körpers (1) und der Waffenplattform (9) und zwischen den Seitenflächen (3, 4) jeweils Lager (21) vorgesehen sind.

5. Einrichtung nach einem der Ansprüche 1 bis 4, dadurch gekennzeichnet, dass der Körper (2) mit einem an der Fahrzeugwanne bzw. Fahrzeugdach (10) befestigten Antrieb (26) ausgerüstet und in die Richtungen (22) oder (23) motorisch oder von Hand drehbar ist, und dass innenseitig oder aussenseitig zwischen den Körpern (1, 2) ein Getriebe (27) angeordnet ist, das bei gemeinsamer Drehbewegung der Körper (1, 2) in die Richtung (22) gesperrt oder gleichläufig ist und bei gegenläufiger Drehbewegung derartig im Eingriff ist, dass die Körper (1, 2) jeweils gleichzeitig und gleichförmig in die entgegengesetzten Richtungen (23) drehbar sind.

6. Einrichtung nach einem der Ansprüche 1 bis 5, dadurch gekennzeichnet, dass die Waffenplattform (9) von einem mit dem Körper (1) im Eingriff stehenden Seitenrichtantrieb (28) antreibbar ist, wobei der Seitenrichtantrieb (28) während der Drehbewegungen des Körpers (1) gegenüber diesem entkoppelbar ist.

7. Einrichtung nach einem der Ansprüche 1 bis 6, dadurch gekennzeichnet, dass die Oberseite (8) des Körpers (1) Bezugsfläche für einen Lagegeber (29) ist.

8. Einrichtung nach einem der Ansprüche 1 bis 7, dadurch gekennzeichnet, dass der Lagegeber (29) eine Dosenlibelle (30) ist und in Zurrstellung der Waffe (5) quer zur Fahrzeuglängsachse (7) angeordnete Markierungen (31) aufweist.

9. Einrichtung nach einem der Ansprüche 1 bis 8, dadurch gekennzeichnet, dass die Körper (1, 2) in Zurrstellung der Waffe (5) mit gegenüber der Waffenplattform (9) und der Fahrzeugwanne bzw. dem Fahrzeugdach (10) übereinstimmenden Markierungen (32) versehen sind.

**Claims**

1. Apparatus for levelling a rotatable weapon platform (9) which has adjusting means and position sensors (29) for counteracting tilting and suspension positions relative to a stationary base (10) and which is mounted as an intermediate carrier for a weapon turret, preferably in or on a vehicle, characterised by the fact that the apparatus comprises two bodies (1, 2) which are connected so as to be rotatable together and in opposite directions to each other, the side surfaces (3, 4) of which bodies face towards each other and which take a parallel course and form oblique planes relative to a floor (13) associated with the body (2) and preferably situated in the well or on the roof (10) of the vehicle, the upper side (8) of the body (1) forming a mounting surface (17) for the weapon platform (9), capable of being levelled, a swivel axis (18) of the weapon platform (9) and the longitudinal axis (15) of the upper side (8) taking up a horizontal position (14) when the bodies (1, 2) are rotated together in the direction (22) whereas the weapon platform (9) takes up a horizontal position, pivoted about the swivel axis (18), when the bodies (1, 2) occupy a position (25) rotated simultaneously and similarly but in opposition in the direction (23).

2. Apparatus in accordance with claim 1, characterised by the fact that the bodies (1, 2) take the form of hollow (19) or solid (20) cylindrical discs (19, 20) bevelled on one side.

3. Apparatus in accordance with claims 1 and 2, characterised by the fact that when the weapon (5) is in the locked position the longitudinal axis (15) and the axes (33, 34) of the bodies are parallel to the longitudinal axis of the vehicle, the traversing axis (11) of the weapon platform (9) forming a straight line with the vertical axis (12) of the vehicle, which is at right angles to the bearing surface (6) of the well of roof (10) of the vehicle, the upper side (8) being parallel to the floor (13), the oblique side surfaces (3, 4) being preferably arranged to ascend or descend in the direction of the longitudinal axis (7) of the vehicle.

4. Apparatus in accordance with claims 1 to 3, characterised by the fact that the bearings (21) are provided between the well or roof (10) of the vehicle and the floor (13) of the body, between the mounting surface (17) of the body (1) and the weapon platform (9) and also between the side surfaces (3, 4).

5. Apparatus in accordance with any one of claims 1 to 4, characterised by the fact that the body (2) has a drive (26) affixed to the well or roof (10) of the vehicle and can be rotated by a motor or manually in directions (22 or 23) and that internally or externally between the bodies (1, 2), a gearing (27) is provided which is disengaged and which moves in the same direction when the bodies are rotated together in the direction (22) while when they are rotating in opposite directions it is engaged in such a way that the bodies (1, 2), are rotatable simultaneously and in the same manner in the opposite directions (23).

6. Apparatus in accordance with any one of claims 1 to 5, characterised by the fact that the weapon platform (9) can be driven by a traversing drive (28) engaged with the body (1), the said drive (28) being disconnectable from the body (1) during the rotatory movements of the latter.

7. Apparatus in accordance with any one of claims 1 to 6, characterised by the fact that the upper side (8) of the body (1) is a reference surface for a position sensor (29).

8. Apparatus in accordance with any one of claims 1 to 7, characterised by the fact that the position sensor (29) comprises a can-type levelling indicator (30) with markings (31) which, when the weapon (5) occupies the locked position are transverse to the longitudinal axis (7) of the vehicle.

9. Apparatus in accordance with any one of claims 1 to 8, characterised by the fact that the bodies (1, 2) are provided with markings (32) which coincide in relation to the weapon platform (9) and the well or roof (10) of the vehicle, when the weapon is in the locked position.

**Revendications**

1. Dispositif d'ajustement d'horizon d'une plate-forme d'armes rotative (9), qui est montée sur affut avec des moyens réglables et des indicateurs de position (29) pour compenser l'obliquité et la pente par rapport à une base stationnaire (10) constituant un support intermédiaire pour une tourelle d'armes, de préférence dans ou sur un véhicule, caractérisé en ce qu'il comprend deux corps (1, 2) reliés de façon à pouvoir tourner ensemble et l'un par rapport à l'autre, dont les faces latérales (3, 4) tournées l'une vers l'autre sont parallèles et forment un plan oblique par rapport à une face inférieure (13) du corps (2) placée, de préférence dans la caisse ou le toit (10) du véhicule, et en ce que la face supérieure (8) du corps (1) constitue une surface de réception (17), pouvant être ajustée sur l'horizon, pour la plate-forme (9), un axe de pivotement (18) de la plate-forme (9) et l'axe longitudinal (15) de la face supérieure (8) prenant, pour une position commune (24) des corps (1, 2) décalée en rotation dans la direction (22), une position horizontale (14), tandis que, pour une position (25) des corps (1, 2) décalée simultanément, de la même façon, mais en sens opposé dans les directions (23), la plate-forme (9) prend une position horizontale (16) ayant pivoté autour de l'axe de pivotement (18).

2. Dispositif selon la revendication 1, caractérisé en ce que les corps (1, 2) sont réalisés sous la forme de disques cylindriques (19, 20) creux (19) ou massifs (20) biseautés d'un côté.

3. Dispositif selon les revendications 1 et 2, caractérisé en ce que, dans la position d'encrage de l'arme (5), l'axe longitudinal (15) et les axes (33, 34) des corps sont parallèles à l'axe longitudinal (7) du véhicule, l'axe de pointage latéral (11) de la plate-forme (9) est aligné avec l'axe vertical (12) du véhicule perpendiculaire à la surface d'appui (6) de la caisse ou du toit (10) du véhicule et la face supérieure (8) est parallèle à la face inférieure (13), les faces latérales obliques (3, 4) étant, de préférence, disposées avec une pente montante ou descendante dans la direction de l'axe longitudinal (7) du véhicule.

4. Dispositif selon l'une des revendications 1 à 3, caractérisé en ce que des coussinets de pivotement (21) sont placés respectivement entre la caisse ou le toit (10) du véhicule et la face inférieure (13) du corps (2), entre la surface de réception (17) du corps (1) et la plate-forme (9) et entre les faces latérales (3, 4).

5. Dispositif selon l'une des revendications 1 à 4, caractérisé en ce que le corps (2) comporte un mécanisme d'entraînement (26) fixé à la caisse ou au toit (10) du véhicule et pouvant être entraîné en rotation mécaniquement ou manuellement dans les directions (22) ou (23), et en ce qu'une transmission (27) est placée intérieurement ou extérieurement entre les corps (1, 2), transmission qui est bloquée ou synchrone lorsque les corps (1, 2) tournent ensemble dans la direction (22), et, qui, lorsqu'ils tournent en sens contraire, est engagée de telle façon que les corps (1, 2) puissent tourner chacune simultanément et de la même façon dans les sens opposés (23).

6. Dispositif selon l'une des revendications 1 à 5, caractérisé en ce que la plate-forme (9) peut être entraînée par un mécanisme d'entraînement de pointage latéral (28) en prise avec le corps (1), le mécanisme d'entraînement (28) pouvant être désaccouplé du corps (1) pendant les mouvements de rotation de celle-ci.

7. Dispositif selon l'une des revendications 1 à 6, caractérisé en ce que la face supérieure (8) du corps (1) est une surface de référence pour un indicateur de position (29).

8. Dispositif selon l'une des revendications 1 à 7, caractérisé en ce que l'indicateur de position (29) est un niveau à bulle (30) et comporte des repères (31) disposés perpendiculairement à l'axe longitudinal (7) du véhicule dans la position d'encrage de l'arme (5).

9. Dispositif selon l'une des revendications 1 à 8, caractérisé en ce que les corps (1, 2) comportent des repères (32) qui coïncident dans la position d'encrage de l'arme (5), avec d'autres sur la plate-forme (9) et la caisse ou le toit (10) du véhicule.

FIG.1

FIG.2

0 123 012

7

FIG.3

FIG.4

FIG.5

FIG.6

FIG.9

FIG.7

FIG.10

FIG.8

FIG.11